# EUROPEAN PATENT APPLICATION

(11) **EP 4 520 844 A1**
(43) Date of publication of application: **12.03.2025**
(21) Application number: 23937785.6
(22) Date of filing: 27.07.2023
(51) Int. Cl.: C22B 23/00, C22B 47/00, C22B 3/06, C22B 3/08, C22B 3/10, C22B 1/00, B01D 21/26, B03B 7/00, B03B 9/00

(54) **METHOD FOR EXTRACTING NICKEL, COBALT AND MANGANESE FROM LATERITE NICKEL ORE BY MEANS OF ACID LEACHING**

(71) Applicant: PT QMB New Energy Materials, Jakarta 12950 (ID); PT ESG New Energy Material, Jakarta 12950 (ID); GEM Co., Ltd., Bao'an Center Area, Bao'an, Shenzhen Guangdong 518101 (CN); PT Gem Indonesia New Energy Materials, Jakarta 12950 (ID)
(72) Inventor: XU, Kaihua, Shenzhen Guangdong 518101 (CN); BRODJONEGORO, Satryo Soemantri, Provinsi DKI Jakarta 12950 (ID); CUI, Tao, Provinsi DKI Jakarta 12950 (ID); AJI, Tegar Mukti, Provinsi DKI Jakarta 12950 (ID); WANALDI, Rizky, Provinsi DKI Jakarta 12950 (ID); RAHMADI, Piyan, Provinsi DKI Jakarta 12950 (ID); HASIBUAN, Andi Syaputra, Provinsi DKI Jakarta 12950 (ID); SALIM, Emil, Provinsi DKI Jakarta 12950 (ID)
(74) Representative: Ipside
(86) International application number: PCT/CN2023/109611
(87) International publication number: WO 2025/020179

(57) **Abstract**

A method for extracting nickel-cobalt-manganese from laterite nickel ore by acid leaching includes the following steps: firstly, subjecting the laterite nickel ore to crushing and a physical separation treatment to separate out chromite and first tailings; then, subjecting the first tailings to a staged concentration treatment to obtain a first ore pulp; then, subjecting the first ore pulp to an atmospheric pressure acid leaching treatment to obtain a second ore pulp; then, subjecting the second ore pulp to microwave treatment; and finally, subjecting the second ore pulp to a solid-liquid separation treatment to obtain a tailing residue and leaching solution containing nickel-cobalt-manganese. The method cannot only effectively reduce the entry of chromium metal into the leaching solution through physical sorting, but also promote the leaching of nickel-cobalt-manganese through pulp adjustment and microwave treatment.

## Description

### FIELD OF THE DISCLOSURE

The disclosure relates to the technical field of nickel-cobalt-manganese material production, and in particular to a method for extracting nickel-cobalt-manganese from laterite nickel ore by acid leaching.

### BACKGROUND

With the rapid development of the battery industry, the world's demand for nickel-cobalt-manganese rises sharply, and the price of nickel-cobalt-manganese rises greatly. High-grade nickel-cobalt-manganese resources become increasingly exhausted, and people focus on the development of low-grade laterite nickel ore with complex composition to produce the nickel-cobalt-manganese raw material for ternary power batteries.

At present, the extraction of nickel from laterite nickel ore with low nickel content is mainly through a hydrometallurgical method, and the main processes are high-pressure acid leaching and atmospheric pressure acid leaching. The atmospheric pressure leaching process of laterite nickel ore has the advantages of a short construction period, a simple process, easy operation, and low energy consumption. However, there are some problems such as low nickel-cobalt-manganese leaching rates, long leaching period, high acid consumption, and high iron content in leaching solution. Therefore, how to improve the leaching rate of nickel-cobalt-manganese metals in laterite nickel ore is the key to extracting nickel-cobalt-manganese metals by atmospheric pressure acid leaching.

Therefore, there is an urgent need for a method for extracting nickel-cobalt-manganese from laterite nickel ore by acid leaching to solve the aforementioned technical problems.

### SUMMARY

The purpose of the disclosure is to provide a method for acid leaching of laterite nickel ore to extract nickel-cobalt-manganese, which is used to solve the technical problem of low leaching rates of nickel-cobalt-manganese metal extracted in the atmospheric pressure acid leaching stage during the production of nickel-cobalt-manganese hydroxide in the existing wet smelting process.

In order to solve the above technical problem, the disclosure provides a method for extracting nickel-cobalt-manganese from laterite nickel ore by acid leaching, including the following steps:
S10, subjecting the laterite nickel ore to crushing and a physical separation treatment to separate out chromite and first tailings;
S20, subjecting the first tailings to a staged concentration treatment to obtain a first ore pulp;
S30, subjecting the first ore pulp to an atmospheric pressure acid leaching treatment to obtain a second ore pulp; and
S40, subjecting the second ore pulp to a solid-liquid separation treatment to obtain a tailing residue and leaching solution containing nickel-cobalt-manganese;
wherein step S40 further includes subjecting the second ore pulp to microwave treatment.

Preferably, step S10 specifically includes:
S101, subjecting the laterite nickel ore to crushing to obtain a first concentrate;
S102, subjecting the first concentrate to a gravity separation treatment to obtain a first chromite and a second concentrate; and
S103, subjecting the second concentrate to a magnetic separation treatment to obtain a second chromite and the first tailings.

Preferably, in step S101, the first concentrate has a particle size of less than 1.5 mm.

Preferably, in step S102, the equipment used for the gravity separation treatment is a shaking table concentrator.

Preferably, in step S103, the equipment used for the magnetic separation treatment is a wet magnetic separator, and the magnetic separation treatment uses two stages of magnetic separation, wherein the magnetic field intensity for a one-stage magnetic separation is in the range of 400-500 kA/m and the magnetic field intensity for a two-stage magnetic separation is in the range of 70-80 kA/m.

Preferably, in step S10, the mass percentage content of chromium in the first tailings is less than 0.1%, and the passing rate through a 200-mesh sieve of the first tailings is in the range of 90%-95%.

Preferably, step S20 specifically includes:
subjecting the first tailings to a pre-classification treatment by using a hydrocyclone, wherein fine particles in the first tailings and a liquid fluid are directly discharged through an overflow port of the hydrocyclone to obtain an ore pulp A; and coarse particles in the first tailings, after having been subjected to a grinding treatment by an inlet grinder, are discharged with the liquid fluid through an overflow port to obtain an ore pulp B; and the ore pulp A and ore pulp B are combined to form the first ore pulp.

Preferably, in step S20, the mass ratio of the solid particles in the first ore pulp is in the range of 20%-30%.

Preferably, step S30 specifically includes:
S301, adding an acidic solution to the first ore pulp and stirring to obtain a second ore pulp;
wherein the acidic solution is at least one of sulfuric acid, nitric acid, and hydrochloric acid; the mass ratio of acidic substances in the acidic solution is in the range of 10%-25%, and the stirring treatment time is in the range of 20-40 min.

Preferably, the step of subjecting the second ore pulp to microwave treatment specifically includes: placing the second ore pulp in a microwave reactor for heating and stirring treatment, wherein the power of the microwave reactor is in the range of 400-800 W; the stirring speed is in the range of 200-300 r/min; and the heating reaction time is in the range of 1-3 h.

Advantageous effects of the disclosure are: unlike the prior art, the disclosure provides a method for extracting nickel-cobalt-manganese from laterite nickel ore by acid leaching includes the following steps: firstly, subjecting the laterite nickel ore to crushing and a physical separation treatment to separate out chromite and first tailings; then, subjecting the first tailings to a staged concentration treatment to obtain a first ore pulp; then, subjecting the first ore pulp to an atmospheric pressure acid leaching treatment to obtain a second ore pulp; then, subjecting the second ore pulp to microwave treatment; and finally, subjecting the second ore pulp to a solid-liquid separation treatment to obtain a tailing residue and leaching solution containing nickel-cobalt-manganese. By the method for extracting nickel-cobalt-manganese from laterite nickel ore by acid leaching provided by the disclosure, chromite is firstly preferentially separated by a physical separation method, reducing chromium metal entering an atmospheric pressure acid leaching stage. Then, by pre-adding acid to adjust the ore pulp, the first ore pulp is brought into a good environment with acid, which is conducive to the leaching of nickel-cobalt-manganese metals. Finally, microwave heating can be used to charge the solid particles in the second ore pulp, which is more conducive to the leaching of nickel-cobalt-manganese metals in the second ore pulp, in turn conducive to improving the leaching rates of nickel-cobalt-manganese in the leaching solution.

### BRIEF DESCRIPTION OF THE DRAWINGS

FIG. 1 is a flowchart of a method for extracting nickel-cobalt-manganese from laterite nickel ore by acid leaching provided in an embodiment of the disclosure; and
FIG. 2 is a process flowchart of a method for extracting nickel-cobalt-manganese from laterite nickel ore by acid leaching provided in an embodiment of the disclosure.

### DETAILED DESCRIPTION OF PREFERRED EMBODIMENTS

The technical solutions in the embodiments of the disclosure will be described clearly and completely in conjunction with the embodiments of the disclosure. Obviously, the described embodiments are only a part of the embodiments of the disclosure, rather than all the embodiments. Based on the embodiments of the disclosure, all Other embodiments obtained by a person of ordinary skill in the art without inventive effort fall within the scope of the disclosure.

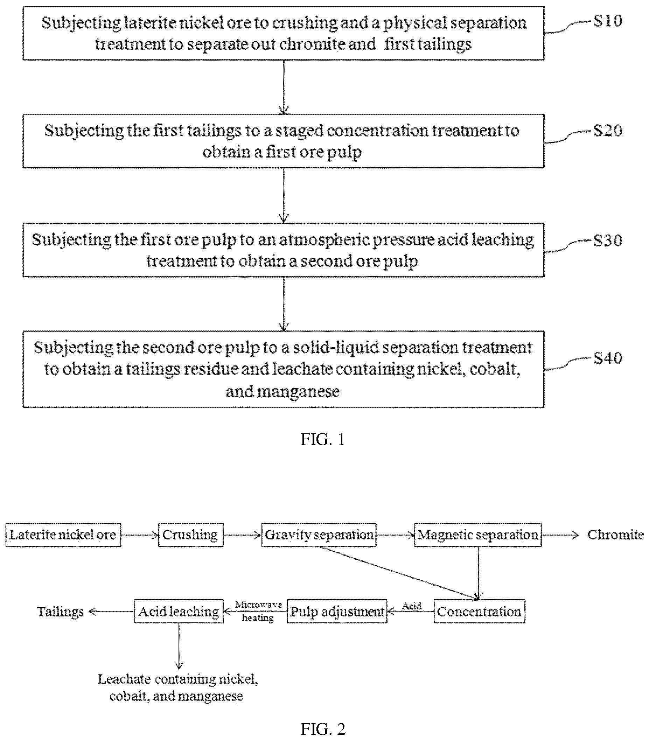

With reference to FIG. 1, which is a schematic flowchart of a method for extracting nickel-cobalt-manganese from laterite nickel ore by acid leaching provided in an embodiment of the disclosure. The method for extracting nickel-cobalt-manganese from laterite nickel ore by acid leaching specifically includes:
S10, subjecting the laterite nickel ore to crushing and a physical separation treatment to separate out chromite and first tailings.

Specifically, step S10 further includes:
firstly, a laterite nickel ore is provided, wherein the laterite nickel ore is a limonite-type laterite nickel ore, a residual ore-type laterite nickel ore, or a mixture of the two.
then, the laterite nickel ore is crushed with a crusher to obtain a first concentrate, wherein the first concentrate has a particle size of less than 1.5 mm; the particle size of the first concentrate less than 1.5 mm can facilitate the subsequent staged concentration treatment.

Then, the first concentrate is subjected to a gravity separation treatment to obtain a first chromite having a first particle size and a second concentrate, wherein gravity separation, also known as separation by gravity, refers to the separation method that uses the difference in relative density, particle size, and shape between the mineral particles to be separated and the difference in movement speed and direction in the medium (water, air, or other liquid with higher relative density) to separate them from each other.

Specifically, the equipment used for the gravity separation treatment is a shaking table concentrator, and the first chromite in the first concentrate can be roughly sorted out and separated according to the action of gravity to obtain a second concentrate.

Finally, the second concentrate is subjected to a magnetic separation treatment to obtain a first chromite having a second particle size and first tailings, wherein the second particle size is smaller than the first particle size. Preferably, the equipment used for the magnetic separation treatment is a wet magnetic separator, and the magnetic separation treatment uses two stages of magnetic separation, wherein the magnetic field intensity for a one-stage magnetic separation is in the range of 400-500 kA/m and the magnetic field intensity for a two-stage magnetic separation is in the range of 70-80 kA/m.

Wherein, the remaining chromite in the second concentrate (second chromite) may be further roughly sorted out and separated according to the action of the magnetic field by a secondary magnetic separation treatment to obtain the first tailings.

Preferably, in step S10, the mass percentage content of chromium in the first tailings is less than 0.1%, and the passing rate through a 200-mesh sieve of the first tailings is in the range of 90%-95%.

Furthermore, the iron and chromium contents in the first tailings obtained by physical separation after crushing the laterite nickel ore are relatively low, which can reduce the entry of iron and chromium into the atmospheric pressure acid leaching stage.

S20, subjecting the first tailings to a staged concentration treatment to obtain a first ore pulp.

Specifically, step S20 further includes:
the first tailings are subjected to a pre-classification treatment by using a hydrocyclone, wherein fine particles in the first tailings and a liquid fluid are directly discharged through an overflow port of the hydrocyclone to obtain an ore pulp A; and coarse particles in the first tailings, after having been subjected to a grinding treatment by an inlet grinder, are discharged with the liquid fluid through an overflow port to obtain an ore pulp B; and the ore pulp A and ore pulp B are combined to form the first ore pulp.

Preferably, in step S20, the mass ratio of the solid particles in the first ore pulp is in the range of 20%-30%.

Specifically, the first ore pulp may be brought to a good environment with acid via step S20, facilitating the leaching of nickel cobalt manganese metals.

S30, subjecting the first ore pulp to an atmospheric pressure acid leaching treatment to obtain a second ore pulp.

Specifically, step S30 further includes:
the first ore pulp is added with an acidic solution and stirred to obtain a second ore pulp; wherein the acidic solution is at least one of sulfuric acid, nitric acid, and hydrochloric acid; the mass ratio of acidic substances in the acidic solution is in the range of 10%-25%, and the stirring treatment time is in the range of 20-40 min. Here, the acidic solution is added to the first ore pulp in order to dissolve the nickel-cobalt-manganese metals.

S40, subjecting the second ore pulp to a solid-liquid separation treatment to obtain a tailing residue and leaching solution containing nickel-cobalt-manganese.

Specifically, step S40 further includes:
Firstly, the second ore pulp is placed in a microwave reactor for heating treatment, wherein the power of the microwave reactor is in the range of 40-800 W.

Then, the reaction is carried out by heating at a certain temperature and a stirring speed for a period of time, wherein the stirring speed is in the range of 200-300 r/min; the temperature is in the range of 85-100°C; and the heating time is in the range of 1-3 h.

Finally, the second ore pulp is subjected to a solid-liquid separation treatment (filtration method) to obtain a tailing residue and leaching solution containing nickel-cobalt-manganese. The tailing residue is washed with hot water 4-5 times, and the washing liquid is mixed into the leaching solution containing nickel-cobalt-manganese.

Specifically, when the microwave reactor performs microwave heating on the second ore pulp, the microwave can rapidly permeate and directly store heat in the solid minerals of the second ore pulp, so that the temperature rise of the solid minerals can be accelerated, further facilitating leaching of nickel, cobalt and manganese metals.

The technical solution of the present application will now be described with reference to specific examples, wherein the laterite nickel ore in all the following examples and comparative examples were selected from limonite laterite nickel ore, and the contents in mass percent of each metal component thereof are as follows: the mass percent content of the Ni component was 1.18%; the mass percent content of the Co component was 0.075%; the mass percent content of the Mn component was 0.568%; the mass percent content of the Cr component was 1.73%; the mass percent content of the Fe component was 41.70%; the mass percent content of the Al component was 4.29%; and the mass percent content of the Mg component was 1.68%.

### Disclosure example:

With reference to FIG. 2, which is a process flowchart of a method for extracting nickel-cobalt-manganese from laterite nickel ore by acid leaching provided in an embodiment of the disclosure, including the following steps:
S10, subjecting the laterite nickel ore to crushing and a physical separation treatment to separate out chromite and first tailings.

### Specifically, step S10 further includes:

First, the laterite nickel ore was crushed by using a crusher to obtain a first concentrate, wherein the first concentrate had a particle size of less than 1.5 mm.

Then, the first concentrate was subjected to a gravity separation treatment by using a shaking table concentrator to obtain a first chromite ore and a second concentrate.

Finally, the second concentrate was subjected to a magnetic separation treatment to obtain a second chromite and first tailings. The equipment used for the magnetic separation treatment was a wet magnetic separator, and the magnetic separation treatment used two stages of magnetic separation. The magnetic field strength for the one-stage magnetic separation was 450 kA/m, which was used for performing rough separation on the chromite in the second concentrate. The magnetic field strength of the two-stage magnetic separation was 80 kA/m, which was used for performing secondary concentration on the remaining chromite in the second concentrate, thereby obtaining the second chromite.

Specifically, after step S10 was completed, the recovery rate of the obtained chromite was 46.23%, and the mass percentage content of Cr₂O₃ in the chromite was 43.22%. The passing rate through a 200-mesh sieve of the first tailings was 90%.

S20, subjecting the first tailings to a staged concentration treatment to obtain a first ore pulp.

### Specifically, step S20 further includes:

The first tailings were subjected to pre-classification treatment by using a hydrocyclone. The fine particles in the first tailings and the liquid fluid were directly discharged through an overflow port of the hydrocyclone to obtain an ore pulp A. Coarse particles in the first tailings, after having been subjected to a fine-grinding treatment by an inlet grinder, were discharged with a liquid fluid through an overflow port to obtain an ore pulp B. Ore pulp A and ore pulp B were combined to form a first ore pulp. Wherein in step S20, the mass percentage of the solid particles in the first ore pulp was 25%.

S30, subjecting the first ore pulp to an atmospheric pressure acid leaching treatment to obtain a second ore pulp.

### Specifically, step S30 further includes:

The first ore pulp was added with an acidic solution and stirred to obtain a second ore pulp. The acidic solution was a concentrated sulfuric acid aqueous solution; the mass concentration of the acidic substance in the concentrated sulfuric acid aqueous solution was 150g/L; the stirring treatment time was 30 min; and the rotation speed of the stirring treatment was 150 r/min.

S40, subjecting the second ore pulp to a solid-liquid separation treatment to obtain a tailing residue and leaching solution containing nickel-cobalt-manganese.

### Specifically, step S40 further includes:

Firstly, the second ore pulp was placed in a microwave reactor for heating treatment, wherein the power of the microwave reactor was 600 W. Then, the reaction was carried out by heating at 90°C and a stirring speed for a period of time, wherein the stirring speed was 250 r/min, and the heating time was 2.5 h. Finally, the second ore pulp was subjected to a solid-liquid separation treatment (filtration method) to obtain a tailing residue and leaching solution containing nickel-cobalt-manganese. The tailing residue was washed with hot water 5 times, and the washing liquid was mixed into the leaching solution containing nickel-cobalt-manganese. The washed tailing residue was dried, weighed, and assayed for the composition.

The results showed that the leaching rates of Ni, Co, and Mn were 88.2%, 79.5%, and 90.34%, respectively.

### Comparative example

The method for extracting nickel cobalt manganese from laterite nickel ore by acid leaching provided in the comparative example was substantially the same as the method for extracting nickel cobalt manganese from laterite nickel ore by acid leaching provided in the example of the disclosure, except that:
In step S40, the second ore pulp was subjected to a solid-liquid separation treatment to obtain a tailing residue and leaching solution containing nickel-cobalt-manganese;
Specifically, the second ore pulp was heated to 90°C in a water bath and reacted under stirring at a rotation speed of 250 r/min for 2.5 h. Then the second ore pulp was subjected to a solid-liquid separation treatment (filtration method) to obtain the tailing residue and the leaching solution containing nickel-cobalt-manganese. The tailing residue was washed with hot water 5 times, and the washing liquid was mixed into the leaching solution containing nickel-cobalt-manganese. The washed tailing residue was dried, weighed, and assayed for the composition.

The results show that the leaching rates of Ni, Co, and Mn were 78.2%, 64.3%, and 82.52%, respectively, after the treatment by the method for extracting nickel cobalt manganese from laterite nickel ore by acid leaching provided in the comparative example.

Through comparison, it can be concluded that using a microwave reactor to heat the second ore pulp by microwave in step S40 is more advantageous for leaching nickel-cobalt-manganese metals from the second ore pulp compared to using a water bath to heat the second ore pulp.

Compared with the prior art, the method for extracting nickel cobalt manganese from laterite nickel ore by acid leaching provided by the examples of the disclosure has the following advantages:
Firstly, the advantage of the disclosure lies in the combination of beneficiation and hydrometallurgy methods, achieving efficient recovery of metals such as nickel, cobalt, manganese, and chromium from laterite nickel ore;
Secondly, the advantage of the disclosure lies in the use of "gravity separation+magnetic separation" to pre-separate chromite from laterite nickel ore, which is beneficial for the recovery of chromium metal and significantly reduces chromium metal ions in the leaching solution after atmospheric pressure acid leaching; and
Thirdly, the advantage of the disclosure lies in the use of microwave heating, which enables rapid internal charging of minerals and promotes the leaching of nickel-cobalt-manganese metals from laterite nickel ore. This is of significant implications for the technology of extracting nickel-cobalt-manganese metals from laterite nickel ores by atmospheric pressure leaching.

In contrast to the prior art, the disclosure provides a method for extracting nickel-cobalt-manganese from laterite nickel ore by acid leaching includes the following steps: firstly, subjecting the laterite nickel ore to crushing and a physical separation treatment to separate out chromite and first tailings; then, subjecting the first tailings to a staged concentration treatment to obtain a first ore pulp; then, subjecting the first ore pulp to an atmospheric pressure acid leaching treatment to obtain a second ore pulp; then, subjecting the second ore pulp to microwave treatment; and finally, subjecting the second ore pulp to a solid-liquid separation treatment to obtain a tailing residue and leaching solution containing nickel-cobalt-manganese. By the method for extracting nickel-cobalt-manganese from laterite nickel ore by acid leaching provided by the disclosure, chromite is firstly preferentially separated by a physical separation method, reducing chromium metal entering an atmospheric pressure acid leaching stage. Then, by pre-adding acid to adjust the ore pulp, the first ore pulp is brought into a good environment with acid, which is conducive to the leaching of nickel-cobalt-manganese metals. Finally, microwave heating can be used to charge the solid particles in the second ore pulp, which is more conducive to the leaching of nickel-cobalt-manganese metals in the second ore pulp, in turn, conducive to improving the leaching rates of nickel-cobalt-manganese in the leaching solution.

It should be noted that each of the above-mentioned examples belongs to the same inventive concept, and the description of each example has its own emphasis. Where the description of each example is not exhaustive, reference can be made to the description of other examples.

The foregoing examples merely present embodiments of the disclosure and are described in more detail and are not to be construed as limiting the scope of the disclosure. It should be noted that, for a person of ordinary skill in the art, a number of deformations and improvements can be made without departing from the conception of the disclosure, all of which fall within the scope of the disclosure. Therefore, the scope of the patent for the disclosure shall be governed by the appended claims.

## Claims

1. A method for extracting nickel-cobalt-manganese from laterite nickel ore by acid leaching, comprising the following steps:
S10, subjecting the laterite nickel ore to crushing and a physical separation treatment to separate out chromite and first tailings;
S20, subjecting the first tailings to a staged concentration treatment to obtain a first ore pulp;
S30, subjecting the first ore pulp to an atmospheric pressure acid leaching treatment to obtain a second ore pulp; and
S40, subjecting the second ore pulp to a solid-liquid separation treatment to obtain a tailing residue and leaching solution containing nickel-cobalt-manganese;
wherein step S40 further comprises subjecting the second ore pulp to microwave treatment.

2. The method for extracting nickel-cobalt-manganese from laterite nickel ore by acid leaching according to claim 1, wherein step S10 specifically comprises:
S101, subjecting the laterite nickel ore to crushing to obtain a first concentrate;
S102, subjecting the first concentrate to a gravity separation treatment to obtain a first chromite and a second concentrate; and
S103, subjecting the second concentrate to a magnetic separation treatment to obtain a second chromite and the first tailings.

3. The method for extracting nickel-cobalt-manganese from laterite nickel ore by acid leaching according to claim 2, wherein in step S101, the first concentrate has a particle size of less than 1.5 mm.

4. The method for extracting nickel-cobalt-manganese from laterite nickel ore by acid leaching according to claim 2, wherein in step S102, the equipment used for the gravity separation treatment is a shaking table concentrator.

5. The method for extracting nickel-cobalt-manganese from laterite nickel ore by acid leaching according to claim 2, wherein in step S103, the equipment used for the magnetic separation treatment is a wet magnetic separator, and the magnetic separation treatment uses two stages of magnetic separation, wherein the magnetic field intensity for a one-stage magnetic separation is in the range of 400-500 kA/m and the magnetic field intensity for a two-stage magnetic separation is in the range of 70-80 kA/m.

6. The method for extracting nickel-cobalt-manganese from laterite nickel ore by acid leaching according to claim 2, wherein in step S10, the mass percentage content of chromium in the first tailings is less than 0.1%, and the passing rate through a 200-mesh sieve of the first tailings is in the range of 90%-95%.

7. The method for extracting nickel-cobalt-manganese from laterite nickel ore by acid leaching according to claim 1, wherein step S20 specifically comprises:
subjecting the first tailings to a pre-classification treatment by using a hydrocyclone, wherein fine particles in the first tailings and a liquid fluid are directly discharged through an overflow port of the hydrocyclone to obtain an ore pulp A; and coarse particles in the first tailings, after having been subjected to a grinding treatment by an inlet grinder, are discharged with the liquid fluid through an overflow port to obtain an ore pulp B; and the ore pulp A and pulp B are combined to form the first ore pulp.

8. The method for extracting nickel-cobalt-manganese from laterite nickel ore by acid leaching according to claim 7, wherein in step S20, the mass ratio of solid particles in the first ore pulp is in the range of 20%-30%.

9. The method for extracting nickel-cobalt-manganese from laterite nickel ore by acid leaching according to claim 1, wherein step S30 specifically comprises:
S301, adding an acidic solution to the first ore pulp and stirring to obtain a second ore pulp;
wherein the acidic solution is at least one of sulfuric acid, nitric acid, and hydrochloric acid; the mass ratio of acidic substances in the acidic solution is in the range of 10%-25%, and the stirring treatment time is in the range of 20-40 min.

10. The method for extracting nickel-cobalt-manganese from laterite nickel ore by acid leaching according to claim 1, wherein the step of subjecting the second ore pulp to microwave treatment specifically comprises: placing the second ore pulp in a microwave reactor for heating and stirring treatment, wherein the power of the microwave reactor is in the range of 400-800 W; the stirring speed is in the range of 200-300 r/min; and the heating reaction time is in the range of 1-3 h.
